# EUROPEAN PATENT APPLICATION

(11) **EP 3 620 085 A1**
(43) Date of publication of application: **11.03.2020**
(21) Application number: 19196037.6
(22) Date of filing: 06.09.2019
(51) Int. Cl.: A47G 21/18

(54) **REUSABLE STRAW**

(30) Priority: 07.09.2018 US 201862728250 P
(71) Applicant: CAN'T LIVE WITHOUT IT, LLC, New York, NY 10010 (US)
(72) Inventor: Serrahima, Mario Quintana, Brooklyn, New York 11222 (US); Burns, Clay Allen, New York, NY 10040 (US); Parmele, James, Brooklyn, NY 11222 (US)
(74) Representative: Thompson, Andrew John

(57) **Abstract**

A reusable straw assembly (10, 80) may include multiple elements that may be removably coupled together. The reusable straw assembly (10, 80) may include a first member (12, 14, 82, 84) comprising an inner and outer surface (24), the inner surface (25) defining a first channel (18, 20, 22, 56) extending the length ofthe first member (12, 14, 82, 84);
a second member (12, 14, 82, 84) comprising an inner and outer surface (24), the inner surface (25) defining a second channel (18, 20, 22, 56) extending the length of the second member (12, 14, 82, 84);
and a connecting member (16, 50, 86) comprising an inner and outer surface (24), the inner surface (25) defining a third channel (18, 20, 22, 56) extending the length of the connecting member (16, 50, 86). The connecting member (16, 50, 86) may be sized to removably receive and retain the first member (12, 14, 82, 84) within the third channel (18, 20, 22, 56) at a connecting member distal end (40, 59). The connecting member (16, 50, 86) may also be sized to removably receive and retain the second member (12, 14, 82, 84) within the third channel (18, 20, 22, 56) at a connecting member proximal end (38, 58).

## Description

### FIELD OF THE INVENTION

Embodiments of the present invention relate to a reusable straw, and more specifically but not exclusively, to a reusable straw that may be assembled for use and dismantled for storage, transport, and/or cleaning.

### BACKGROUND OF THE INVENTION

Plastic or disposable straws are increasingly becoming an environmental concern. Disposable straws that are thrown away after use are transported to landfills, and some amount of disposable straws may end up in the ocean and other waterways causing negative environmental effects. Reducing the number of disposable straws that are used can have positive effects on the environment by reducing waste, including waste that ends up in the oceans. In addition, a reusable straw can be more durable and economical in the long run for people who purchase straws.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

Embodiments of the present invention include a multi-piece reusable straw with straw members and a connecting member. The straw members may be inserted into and removed from the connecting member to assemble and disassemble the reusable straw. The connecting member may include one or more projection(s) extending from an inner surface of the connecting member into a channel defined by an inner surface of the connecting member. The one or more projection(s) may prevent one or more of the straw members from being inserted into the connecting member past the projection(s).

In some embodiments, the reusable straw may be used with a drinkware system that includes a beverage container and a beverage container lid. The beverage container lid may define an opening into which the reusable straw may be inserted.

In a first aspect there is provided a reusable straw assembly comprising: a first member having a length and comprising a first member inner surface and a first member outer surface, wherein the first member inner surface defines a first channel extending the length of the first member; a second member having a length and comprising a second member inner surface and a second member outer surface, wherein the second member inner surface defines a second channel extending the length of the second member; and a connecting member having a length and comprising a connecting member inner surface and a connecting member outer surface, wherein the connecting member inner surface defines a third channel extending the length of the connecting member, wherein the connecting member is sized to removably receive and retain the first member within the third channel at a connecting member distal end and is sized to removably receive and retain the second member within the third channel at a connecting member proximal end.

In a second aspect there is provided a drinkware system comprising: a beverage container; a beverage container lid defining an opening; and a reusable straw assembly comprising: a first member having a length and defining a first channel extending the length of the first member; a second member having a length and defining a second channel extending the length of the second member; and a connecting member having a length and defining a third channel extending the length of the connecting member; wherein the connecting member is sized to removably receive and retain the first member within the third channel at a connecting member distal end and is sized to removably receive and retain the second member within the third channel at a connecting member proximal end.

In a third aspect there is provided a reusable straw comprising: a first member having a length and comprising a first member inner surface and a first member outer surface, wherein the first member inner surface defines a first channel extending the length of the first member; a second member having a length and comprising a second member inner surface and a second member outer surface, wherein the second member inner surface defines a second channel extending the length of the second member; and an angled connecting member having a length and comprising an angled connecting member inner surface, an angled connecting member outer surface, and at least one projection, wherein the angled connecting member inner surface defines a third channel extending the length of the angled connecting member, wherein the angled connecting member is removably coupled to the first member at an angled connecting member distal end and wherein the angled connecting member is also removably coupled to the second member at an angled connecting member proximal end.

### BRIEF DESCRIPTION OF THE DRAWINGS

A further understanding of the nature and advantages of various embodiments may be realized by reference to the following figures. In the appended figures, similar components or features may have the same reference label.
Figure 1 is a perspective view of a reusable straw assembly according to certain embodiments of the present invention.
Figure 2 is an exploded view of the reusable straw assembly of FIG. 1.
Figure 3 is a cross-sectional view of a first member of the reusable straw assembly of FIG. 1.
Figure 4 is a cross-sectional view of one embodiment of a connecting member for use in the reusable straw assembly of FIG. 1.
Figure 5 is a cross-sectional view of another embodiment of a connecting member for use in the reusable straw assembly of FIG. 1.
Figure 6 is a cross-sectional view of yet another embodiment of a connecting member for use in the reusable straw assembly of FIG. 1.
Figure 7 is a top perspective view of the reusable straw of FIG. 1 inserted into a lid of a beverage container as part of a beverage container system.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "up," "upper," "lower," "down," "top," "left," "right," "bottom," "among others, are intended to refer to the orientation as illustrated and described in the figure (or figures) to which the components and directions are referencing.

The described embodiments of the disclosure provide a reusable straw assembly formed from multiple elements, which may be separate elements. In some embodiments the reusable straw assembly may be formed from three elements which may be removably coupled to one another. Each of the elements may include an inner channel and each inner channel may be in fluid communication with the other inner channels when the elements are assembled to form the reusable straw assembly such that a liquid may flow through the inner channels of the reusable straw assembly.

The elements of the reusable straw assembly impart a number of advantages to the reusable straw assembly. For example, one or all of the elements may be detached from each other so that the reusable straw assembly may be more compact to help with storage and transport of the reusable straw assembly. Additionally, detaching the elements may allow a user to easily and thoroughly clean each of the elements because separating or decoupling the elements may provide easy access to the inner channels of the separate elements. In embodiments where one or more of the elements has a bend or curve in it, separating the elements may provide access to the bent portion that otherwise may have been difficult to clean. The reusable straw may be especially beneficial and economical for those individuals who have to use straws to drink and/or eat due to medical conditions or disabilities.

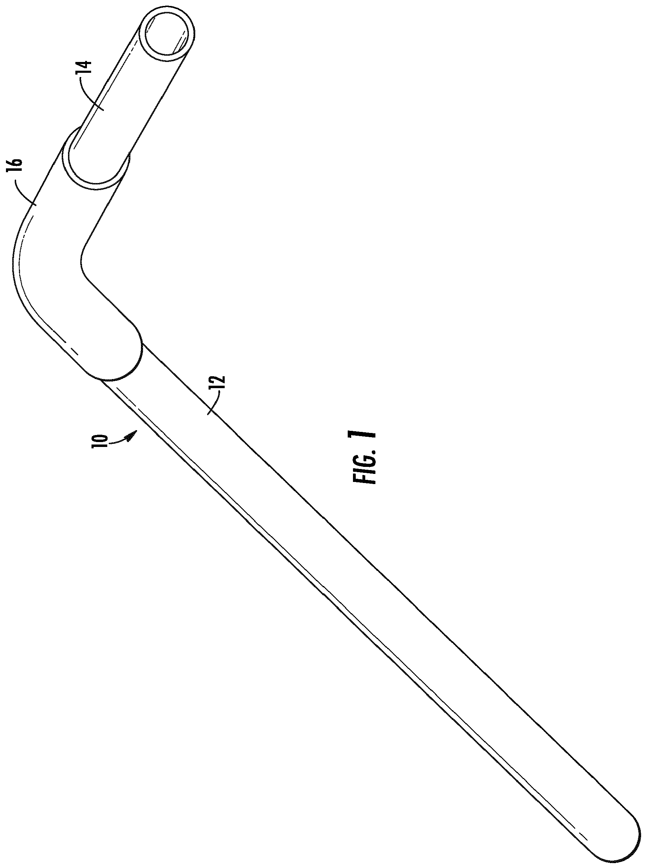

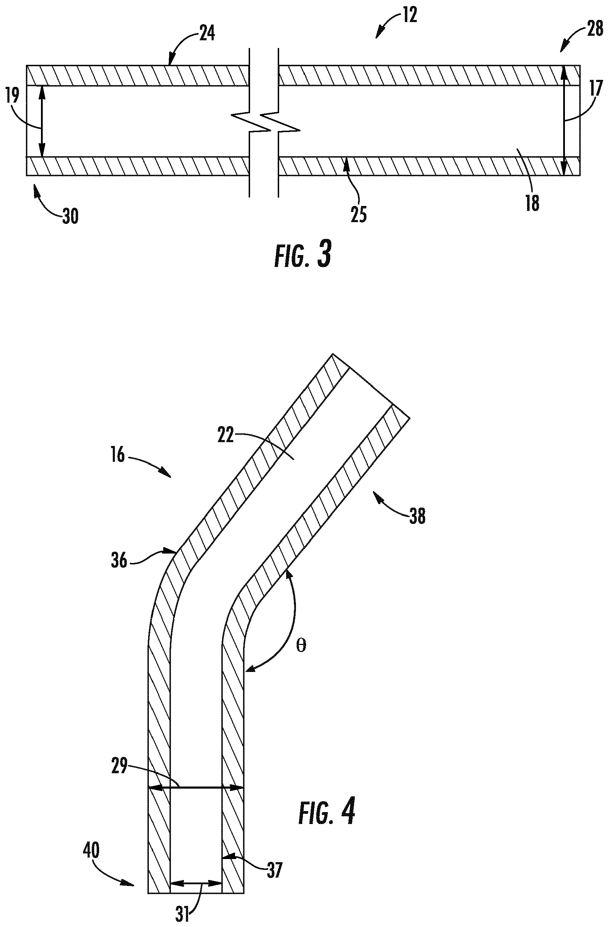

According to certain embodiments of the present disclosure, as shown in FIGS. 1-4, the reusable straw assembly 10 may include three elements: a first member 12, a second member 14, and a connecting member 16. The first member 12 may be removably coupled with the connecting member 16 at a first end of the connecting member 16, and the second member 14 may be removably coupled with the connecting member 16 at a second end of the connecting member 16. The connecting member 16 may be positioned between the first member 12 and the second member 14 such that both the first member 12 and the second member 14 may be removably attached to the connecting member 16.

In some embodiments, the first member 12 may include a first member proximal end 28 and a first member distal end 30, the second member 14 may include a second member proximal end 32 and a second member distal end 34, and the connecting member 16 may include a connecting member proximal end 38 and a connecting member distal end 40. The proximal ends may be defined as the ends of the first member 12, the second member 14, and the connecting member 16 positioned closest, when moving along the reusable straw assembly 10, to a user drinking through the reusable straw assembly 10. For example, a user may drink a liquid through the reusable straw assembly 10 by placing his or her lips around the second member proximal end 32 and creating a suction force. The distal ends may be defined as the ends of the first member 12, the second member 14, and the connecting member 16 positioned farthest, when moving along the reusable straw assembly 10, from a user drinking through the reusable straw assembly 10.

In some embodiments, the second member proximal end 32 may be designed such that the size, shape, material, etc. of the second member proximal end 32 may reduce the risk of potential injuries to a user. For example, the second member proximal end 32 may have a slightly rolled or curved edge. Furthermore, the second member proximal end 32 may be made of or covered with a soft material such as plastic, silicone, bamboo, rubber, or any other suitable material. For example, the second member proximal end 32 may be covered with a protective sleeve, also referred to as a tubular covering, made from a flexible silicone.

The first member 12 may be any suitable length to extend into a beverage container. In some embodiments, the first member 12 may have a length in the range of about 4 to about 8 inches. While the first member 12 is depicted as straight in FIGS. 1-3, in some embodiments the first member 12 may be any other suitable shape, including bent, curved, or any other desirable shape. The second member 14 may be any suitable length. In some embodiments the second member 14 may be a length in the range of about 1 to about 4 inches. While the second member 14 is shown in FIGS. 1-3 as straight, in some embodiments the second member 14 may be bent, curved or any other desirable shape. While the first member 12 is depicted as being longer than the second member 14, in some embodiments the second member 14 may be longer than the first member 12 or both the first member 12 and the second member 14 may be the same length. Similarly, the connecting member 16 may be any suitable length or shape. For example, the connecting member 16 may have an angled, bent, or curved profile (e.g., angled at any suitable angle θ greater than or equal to approximately 90 degrees and less than approximately 180 degrees). However, in some embodiments, the connecting member may be straight (e.g., substantially linear).

Additionally, while the first member 12 and the second member 14 are each shown as a single, monolithic piece, one or both members 12, 14 may be formed from multiple pieces. For example, one or both of the first member 12 and the second member 14 may be formed of multiple segments that engage each other in a telescoping fashion. In this way, the length of the first member 12 and/or the second member 14 may be adjusted and locked in position as desired. This may be particularly useful for the storage, transport, and cleaning of the reusable straw assembly 10. In some embodiments, adjusting the length of the first member 12 and the second member 14 may permit a user to adjust the overall length of the reusable straw assembly 10. This may allow the reusable straw 10 to be adjusted to fit beverage containers of various sizes and to be adjusted to be used by users of various ages (e.g., children to adults). Similarly, the connecting member 16 may also be formed as a single, monolithic piece or from multiple adjustable pieces.

In some embodiments, the first member 12, the second member 14, and the connecting member 16 may each have a circular cross-sectional shape and include an outer surface and an inner surface. For example, the first member 12 has a first member outer surface 24 and a first member inner surface 25, the second member 14 has a second member outer surface 26 and a second member inner surface 27, and the connecting member 16 has a connecting member outer surface 36 and a connecting member inner surface 37.

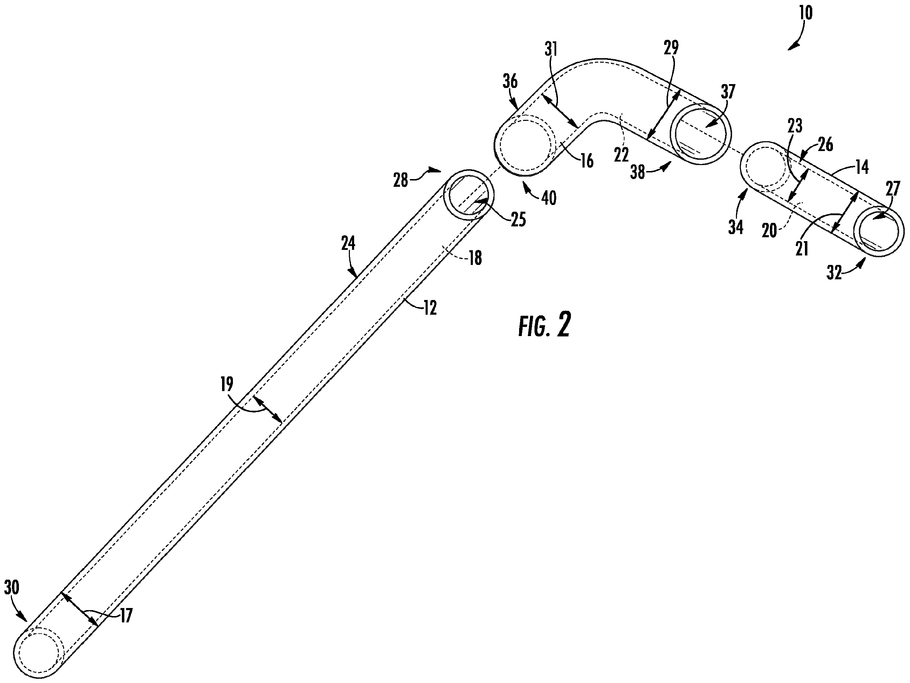

The inner surfaces 25, 27, 37 may define a channel extending the entire length of the respective member 12, 14, 16. For example, the first member inner surface 25 may define a first channel 18, the second member inner surface 27 may define a second channel 20, and the connecting member inner surface 37 may define a third channel 22 (see FIGS. 2-4). The channels 18, 20, 22 may extend centrally through the length of the respective member 12, 14, 16. For example, the third channel 22 may extend along the same shape and angle as the connecting member outer surface 26. The first channel 18, the second channel 20, and the third channel 22 may permit fluids to pass through the first member 12, the second member 14, and the connecting member 16, respectively.

While the first member 12 and the second member 14 are illustrated as cylinders having a circular cross-sectional shape, and the connecting member 16 is illustrated as a bent cylinder having a circular cross-sectional shape, the first member 12, the second member 14, and the connecting member 16 may have any other suitable cross-sectional shapes, including, but not limited to, square, triangular, oval, etc. Moreover, the shape of the first member 12, the second member 14, and/or the connecting member 16 may be the same or different. For example, the first member 12 may have a square cross-sectional shape while the second member 14 may have an oval cross-sectional shape. In some embodiments, the connecting member 16 may have a triangular cross-sectional shape while the first member 12 and the second member 14 may both have a square cross-sectional shape. Overall, the first member 12, the second member 14, and the connecting member 16 may be of any shape that permits coupling of these components to form a reusable straw assembly 10. Furthermore, while the cross-sectional shape of the inner surface of each of the first member 12, the second member 14, and the connecting member 16 is illustrated as being the same as the cross-sectional shape of the respective outer surface of each of the first member 12, the second member 14, and the connecting member 16, the cross-sectional shapes of the respective inner surface and outer surface of the members 12, 14, 16 may be different. For example, the cross-sectional shape of the first member inner surface 25 may be circular while the cross-sectional shape of the first member outer surface 24 may be triangular.

In some embodiments, the first member outer diameter 17 and the second member outer diameter 21 may be the same. In other embodiments, the first member outer diameter 17 and the second member outer diameter 21 may be different. The connecting member outer diameter 29 may be greater than both the first member outer diameter 17 and the second member outer diameter 21.

Additionally, the first channel diameter 19 and the second channel diameter 23 may be the same or different. The first channel diameter 19 and the second channel diameter 23 may vary across the length of the first member 12 and the second member 14, respectively, such that a thickness of the first member 12 and the second member 14 varies across the length of the first member 12 and the second member 14, respectively. In some embodiments, the thickness of each member 12, 14, 16 is the distance between the respective outer surface 24, 26, 36 and inner surface 25, 27, 37 at any given point along each member 12, 14, 16.

The first member outer diameter 17, the second member outer diameter 21, and the connecting member outer diameter 29 and/or of the first channel diameter 19, the second channel diameter 23, and the third channel diameter 31 may vary depending on the intended use of the reusable straw assembly 10. For example, the first channel diameter 19, the second channel diameter 23, and/or the third channel diameter 31 may have a larger diameter if the reusable straw assembly 10 is intended to be used to drink "thicker" or more viscous liquids, such as a blended smoothie or a blended frozen beverage. In some embodiments, the first channel diameter 19, the second channel diameter 23, and/or the third channel diameter 31 may be smaller if the reusable straw assembly 10 is intended to be used to drink "thinner," or less viscous liquids, such as water or juice.

The third channel diameter 31 may be consistent or varied along the length of the connecting member 16. In some embodiments, the third channel diameter 31 at a connecting member proximal end 38 and a connecting member distal end 40 is sized to receive and retain the second member 14 and the first member 12, respectively. The third channel diameter may be sized such that the first member 12 and the second member 14 are secured via a friction fit with the connecting member 16. For example, the first member outer surface 24 may contact the connecting member inner surface 37 at a connecting member distal end 40 and the second member outer surface 26 may contact the connecting member inner surface 37 at a connecting member proximal end 38. The friction fit between the connecting member 16, the first member 12, and the second member 14 may allow the first member 12 and the second member 14 to be removably coupled to the connecting member 16.

In some embodiments, one or more insertion limiting features (e.g., projection, tabs, lips, ledges, protrusions or other similar structure) may extend from the connecting member inner surface 37 into the third channel 22 proximate one or both of the connecting member proximal end 38 and the connecting member distal end 40 to limit how far into the third channel 22 that the first member 12 and the second member 14 may be inserted. Such insertion limiting features may be formed integrally with the connecting member 16 or may be attached to the connecting member 16.

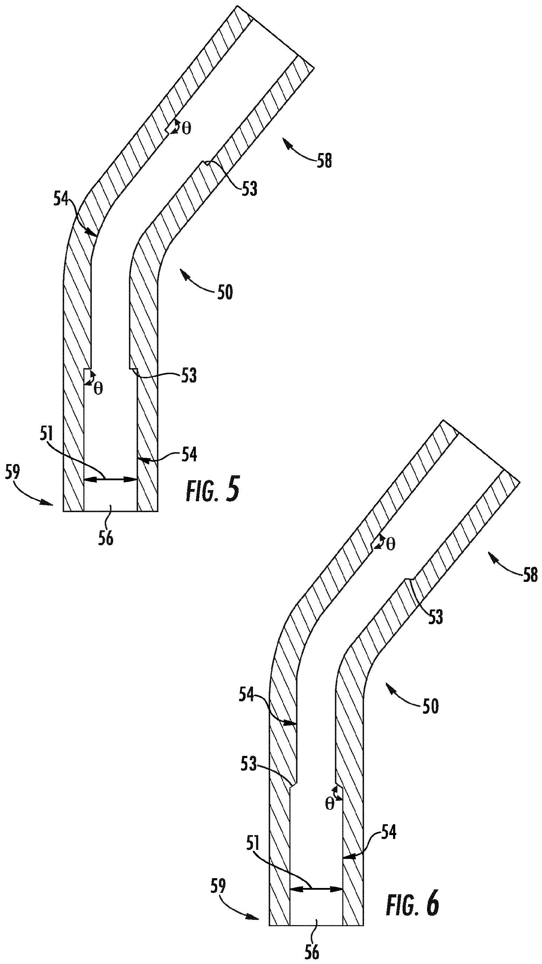

FIGS. 5 and 6 illustrate other embodiments of a connecting member 50 that may be used in the reusable straw assembly 10 of FIG. 1. Connecting member 50 is provided with insertion limiting features in the form of ledges 53 formed along the connecting member inner surface 54 so as to extend partially into the third channel 56. In this way, the connecting member inner diameter 51 of the connecting member 50 varies so as to create a central portion having a smaller connecting member inner diameter 51 than the two end portions of the third channel 56 proximate the connecting member proximal end 58 and the connecting member distal end 59. The ledges 53 prevent the first member 12 and the second member 14 from being inserted into the connecting member 50 beyond the ledges 53. More specifically, the first member 12 and the second member 14 may be inserted into the connecting member 50 until they abut the ledges 53, at which point the connecting member inner diameter 54 is less than the outer diameter of the first member 12 and the second member 14. The location of the ledge 53 along the connecting member 50 may control the distance that the first member 12 and the second member 14 may be inserted into the connecting member 50.

In some embodiments (see FIG. 5), the ledges 53 may extend into the third channel 56 from the connecting member inner surface 54 at an angle θ of approximately 90 degrees relative to the connecting member inner surface 54. In other embodiments (see FIG. 6), the ledges 53 are ramped surfaces that extend at an angle θ greater than approximately 90 degrees from the connecting member inner surface 54. The ledges 53 may extend entirely or only partially around the circumference of the connecting member inner surface 54. While the insertion limiting features are illustrated as ledges 53, other limiting features may be used, including for example discrete dots, tabs, etc.

Additionally, the first member 12 and the second member 14 may each include one or more receiving features (e.g., recesses, indentations, openings, etc.) on the first member outer surface 24 and the second member outer surface 26 proximate the first member proximal end 28 and the second member distal end 34, respectively, for engaging with the insertion limiting features of the connecting member 50. Such engagement may indicate to the user when each of the first member 12 and the second member 14 is properly positioned within the connecting member 50 and may facilitate retention of the first member 12 and/or the second member 14 within the connecting member 16.

The first member 12, the second member 14, and the connecting member 16 may be formed of any material suitable for use as a drinking accessory. The material may have sufficient rigidity such that the first member 12, the second member 14, and the connecting member 16 do not collapse when subjected to a suction force created during use as this could restrict the flow of the liquid through the first member 12, the second member 14, and the connecting member 16. In some embodiments, the first member 12, the second member 14, and the connecting member 16 may comprise materials including, but not limited to, metal (e.g., titanium, aluminum, stainless steel, etc.), rigid plastic, glass, bamboo, silicone, etc. In some embodiments, the connecting member 16, the first member 12, and the second member 14 may be formed from a material that is sturdy enough to support the reusable straw assembly 10 while also permitting flexing, bending, or other suitable movements. This flexible material may include, but is not limited to, a deformable polymeric or rubber material, such as silicone, or any other suitable material.

The first member 12, the second member 14, and the connecting member 16 may each be formed from the same or different materials. For example, the first member 12 may be formed from titanium, the second member 14 may be formed from bamboo, and the connecting member 16 may be formed from silicone.

By forming the connecting member 16 from a relatively flexible material, the risk of injury to the user may be reduced. For example, if the first member distal end 30 were to hit a bottom of a beverage container while the user is drinking through the reusable straw assembly 10, the connecting member 16 comprising a deformable material may flex or bend to absorb some of the force from the hit. The bending or flexing of the connecting member 16 would allow the second member 14 to change position and prevent the second member 14 from exerting as strong a force on the user's teeth and roof of mouth. Minimizing the force the second member 14 may exert on a user's teeth or roof of the user's mouth may minimize the potential for the chipping or breaking of a tooth or damage to the interior of the mouth. Similarly, if a force is applied directly to the second member 14, the connecting member 16 may bend to minimize the risk of injury to the user.

In some embodiments, the first member 12, the second member 14, and the connecting member 16 may have any suitable variety of colors, which may be imparted during or after the formation of each of the first member 12, the second member 14, and/or the connecting member 16. Moreover, the first member 12, the second member 14, and the connecting member 16 may be opaque, translucent, semi-transparent, substantially transparent, etc. A semi-transparent or substantially transparent connecting member 16 may include the added benefit of being able to see the third channel 22 through the outer surface of the connecting member 16. This view of the third channel 22 may assist in positioning the first member 12 and the second member 14 within the connecting member 16.

In some embodiments, one or more portions of the outer surface of the first member 12, the second member 14, and/or the connecting member 16 may be texturized while one or more other portions of the outer surface of one or more of the first member 12, the second member 14, and the connecting member 16 may be smooth. In other embodiments, the entirety of the outer surface of the first member 12, the second member 14, and/or the connecting member may be texturized.

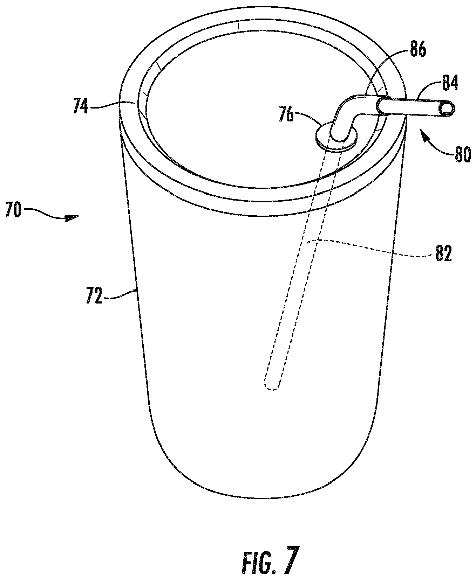

In some embodiments (e.g., FIG. 7), a reusable straw assembly 80 may be the same reusable straw assembly 10 described above with respect to FIGS. 1-4. For example, the reusable straw assembly 80 may include a first member 82, a second member 84, and a connecting member 86. The reusable straw assembly 80 may be used as part of a drinkware system 70 that may also include a beverage container 72 and a beverage container lid 74. The beverage container lid 74 may define an opening 76 through which the reusable straw assembly 80 may be inserted into and extend into the beverage container 72 when the beverage container lid 74 is coupled to the beverage container 72. In some embodiments, the reusable straw assembly 80 may be inserted through the opening 76 when the beverage container lid 74 is removed from the beverage container 72.

The opening 76 is sized to receive at least the first member 82 and may be sized to receive at least a portion of the connecting member 86. In embodiments in which the connecting member 86 is formed out of a deformable material, the connecting member 86 may be friction fit into the opening 76 and may conform to the shape of the opening 76. This enables the reusable straw assembly 80 to remain in place while positioned within the beverage container lid 74 of the drinkware system 70 and prevents the reusable straw assembly 80 from sliding down into the beverage container 72 and potentially impacting the bottom of the beverage container 72, which may cause injury to the user. In some embodiments, the connecting member 86 may function as a stopper when the reusable straw assembly 80 is assembled and inserted into the opening 76. By conforming to the shape of the opening 76, the reusable straw assembly may assist in preventing spills through the opening 76 when the drinkware assembly is knocked over.

As used below, any reference to a series of examples is to be understood as a reference to each of those examples disjunctively (e.g., "Examples 1-4" is to be understood as "Examples 1, 2, 3, or 4"). In the following, further examples are described to facilitate the understanding of the invention:
Example 1 is a reusable straw assembly comprising: a first member having a length and comprising a first member inner surface and a first member outer surface, wherein the first member inner surface defines a first channel extending the length of the first member; a second member having a length and comprising a second member inner surface and a second member outer surface, wherein the second member inner surface defines a second channel extending the length of the second member; and a connecting member having a length and comprising a connecting member inner surface and a connecting member outer surface, wherein the connecting member inner surface defines a third channel extending the length of the connecting member, wherein the connecting member is sized to removably receive and retain the first member within the third channel at a connecting member distal end and is sized to removably receive and retain the second member within the third channel at a connecting member proximal end.
Example 2 is the reusable straw assembly of example(s) 1, wherein a diameter of the first channel and a diameter of the second channel are uniform along the length of the first member and the second member, respectively.
Example 3 is the reusable straw assembly of example(s) 1, wherein a diameter of the third channel varies along the length of the connecting member.
Example 4 is the reusable straw assembly of example(s) 1, wherein the connecting member comprises at least one insertion limiting feature extending partially into the third channel.
Example 5 is the reusable straw assembly of example(s) 4, wherein a connecting member inner diameter through a middle portion of the connecting member is less than the connecting member inner diameter at the connecting member distal end and the connecting member proximal end.
Example 6 is the reusable straw assembly of example(s) 4, wherein the at least one insertion limiting feature comprises a first ledge located proximate the connecting member proximal end and a second ledge located proximate the connecting member distal end, at least one of the first ledge or the second ledge extending into the third channel at an approximately 90 degree angle from the connecting member inner surface.
Example 7 is the reusable straw assembly of example(s) 4, wherein the at least one insertion limiting feature comprises a first ledge located proximate the connecting member proximal end and a second ledge located proximate the connecting member distal end, at least one of the first ledge or the second ledge extending into the third channel at an angle greater than approximately 90 degrees from the connecting member inner surface.
Example 8 is the reusable straw assembly of example(s) 4, wherein the at least one insertion limiting feature comprises a first tab located proximate the connecting member proximal end and a second tab located proximate the connecting member distal end.
Example 9 is the reusable straw assembly of example(s) 4, wherein the at least one insertion limiting feature is configured to prevent the first member and the second member from being inserted into the third channel beyond the at least one insertion limiting feature.
Example 10 is a drinkware system comprising: a beverage container; a beverage container lid defining an opening; and a reusable straw assembly comprising: a first member having a length and defining a first channel extending the length of the first member; a second member having a length and defining a second channel extending the length of the second member; and a connecting member having a length and defining a third channel extending the length of the connecting member; wherein the connecting member is sized to removably receive and retain the first member within the third channel at a connecting member distal end and is sized to removably receive and retain the second member within the third channel at a connecting member proximal end.
Example 11 is the drinkware system of example(s) 10, wherein the opening of the beverage container lid is sized to receive the first member and a portion of the connecting member.
Example 12 is the drinkware system of example(s) 10, wherein a first portion of the connecting member is inserted into and friction fit with the opening so that a second portion of the connecting member and the second member may not be inserted into the opening.
Example 13 is a reusable straw comprising: a first member having a length and comprising a first member inner surface and a first member outer surface, wherein the first member inner surface defines a first channel extending the length of the first member; a second member having a length and comprising a second member inner surface and a second member outer surface, wherein the second member inner surface defines a second channel extending the length of the second member; and an angled connecting member having a length and comprising an angled connecting member inner surface, an angled connecting member outer surface, and at least one projection, wherein the angled connecting member inner surface defines a third channel extending the length of the angled connecting member, wherein the angled connecting member is removably coupled to the first member at an angled connecting member distal end and wherein the angled connecting member is also removably coupled to the second member at an angled connecting member proximal end.
Example 14 is the reusable straw of example(s) 13, wherein a diameter of the third channel of the angled connecting member varies along the length of the angled connecting member.
Example 15 is the reusable straw of example(s) 14, wherein the diameter of the third channel is greater at the angled connecting member distal end than at a middle region of the angled connecting member and wherein the diameter of the third channel is greater at the angled connecting member proximal end than at the middle region of the angled connecting member.
Example 16 is the reusable straw of example(s) 13, wherein the at least one projection is integrally formed with the angled connecting member and protrudes partially into the third channel.
Example 17 is the reusable straw of example(s) 16, wherein the at least one projection comprises a ledge that extends at an approximately 90 degree angle from the angled connecting member inner surface or at an angle greater than approximately 90 degrees from the angled connecting member inner surface.
Example 18 is the reusable straw of example(s) 16, wherein the at least one projection comprises a first ledge located proximate the angled connecting member distal end that prevents the first member from extending past the first ledge towards the angled connecting member proximal end when the first member is coupled to the angled connecting member.
Example 19 is the reusable straw of example(s) 18, wherein the projection comprises a second ledge located proximate the angled connecting member proximal end that prevents the second member from extending past the second ledge towards the angled connecting member distal end when the second member is coupled to the angled connecting member.
Example 20 is the reusable straw of example(s) 19, wherein the first ledge and the second ledge are either integral or independent.

It should be noted that the systems and devices discussed above are intended merely to be examples. It must be stressed that various embodiments may omit, substitute, or add various procedures or components as appropriate. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention.

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

Having described several embodiments, it will be recognized by those of skill in the art that various modifications, alternative constructions, and equivalents may be used without departing from the spirit of the invention. For example, the above elements may merely be a component of a larger system, wherein other rules may take precedence over or otherwise modify the application of the invention. Also, a number of steps may be undertaken before, during, or after the above elements are considered. Accordingly, the above description should not be taken as limiting the scope of the invention.

## Claims

1. A reusable straw assembly comprising:
a first member having a length and comprising a first member inner surface and a first member outer surface, wherein the first member inner surface defines a first channel extending the length of the first member;
a second member having a length and comprising a second member inner surface and a second member outer surface, wherein the second member inner surface defines a second channel extending the length of the second member; and
a connecting member having a length and comprising a connecting member inner surface and a connecting member outer surface, wherein the connecting member inner surface defines a third channel extending the length of the connecting member,
wherein the connecting member is sized to removably receive and retain the first member within the third channel at a connecting member distal end and is sized to removably receive and retain the second member within the third channel at a connecting member proximal end.

2. The reusable straw assembly of claim 1, wherein a diameter of the first channel and a diameter of the second channel are uniform along the length of the first member and the second member, respectively, and optionally wherein a diameter of the third channel varies along the length of the connecting member.

3. The reusable straw assembly of any preceding claim, wherein the connecting member comprises at least one insertion limiting feature extending partially into the third channel.

4. The reusable straw assembly of claim 3, wherein a connecting member inner diameter through a middle portion of the connecting member is less than the connecting member inner diameter at the connecting member distal end and the connecting member proximal end.

5. The reusable straw assembly of claim 3, wherein the at least one insertion limiting feature comprises a first ledge located proximate the connecting member proximal end and a second ledge located proximate the connecting member distal end, at least one of the first ledge or the second ledge extending into the third channel at an approximately 90 degree angle from the connecting member inner surface, or at an angle greater than approximately 90 degrees from the connecting member inner surface.

6. The reusable straw assembly of claim 3, wherein the at least one insertion limiting feature comprises a first tab located proximate the connecting member proximal end and a second tab located proximate the connecting member distal end.

7. The reusable straw assembly of any of claims 3 to 6, wherein the at least one insertion limiting feature is configured to prevent the first member and the second member from being inserted into the third channel beyond the at least one insertion limiting feature.

8. A drinkware system comprising:
a beverage container;
a beverage container lid defining an opening; and
a reusable straw assembly comprising:
a first member having a length and defining a first channel extending the length of the first member;
a second member having a length and defining a second channel extending the length of the second member; and
a connecting member having a length and defining a third channel extending the length of the connecting member;
wherein the connecting member is sized to removably receive and retain the first member within the third channel at a connecting member distal end and is sized to removably receive and retain the second member within the third channel at a connecting member proximal end.

9. The drinkware system of claim 8, wherein the opening of the beverage container lid is sized to receive the first member and a portion of the connecting member, and/or wherein a first portion of the connecting member is inserted into and friction fit with the opening so that a second portion of the connecting member and the second member may not be inserted into the opening.

10. A reusable straw comprising:
a first member having a length and comprising a first member inner surface and a first member outer surface, wherein the first member inner surface defines a first channel extending the length of the first member;
a second member having a length and comprising a second member inner surface and a second member outer surface, wherein the second member inner surface defines a second channel extending the length of the second member; and
an angled connecting member having a length and comprising an angled connecting member inner surface, an angled connecting member outer surface, and at least one projection, wherein the angled connecting member inner surface defines a third channel extending the length of the angled connecting member,
wherein the angled connecting member is removably coupled to the first member at an angled connecting member distal end and wherein the angled connecting member is also removably coupled to the second member at an angled connecting member proximal end.

11. The reusable straw of claim 10, wherein a diameter of the third channel of the angled connecting member varies along the length of the angled connecting member, and optionally wherein the diameter of the third channel is greater at the angled connecting member distal end than at a middle region of the angled connecting member and wherein the diameter of the third channel is greater at the angled connecting member proximal end than at the middle region of the angled connecting member.

12. The reusable straw of either of claims 10 or 11, wherein the at least one projection is integrally formed with the angled connecting member and protrudes partially into the third channel.

13. The reusable straw of claim 12, wherein the at least one projection comprises a ledge that extends at an approximately 90 degree angle from the angled connecting member inner surface or at an angle greater than approximately 90 degrees from the angled connecting member inner surface.

14. The reusable straw of claim 12, wherein the at least one projection comprises a first ledge located proximate the angled connecting member distal end that prevents the first member from extending past the first ledge towards the angled connecting member proximal end when the first member is coupled to the angled connecting member.

15. The reusable straw of claim 14, wherein the projection comprises a second ledge located proximate the angled connecting member proximal end that prevents the second member from extending past the second ledge towards the angled connecting member distal end when the second member is coupled to the angled connecting member, and optionally wherein the first ledge and the second ledge are either integral or independent.
